# EUROPÄISCHE PATENTSCHRIFT

(11) **EP 1 532 477 B1**
(45) Veröffentlichungstag und Bekanntmachung des Hinweises auf die Patenterteilung: **03.03.2010**
(21) Anmeldenummer: 03747814.6
(22) Anmeldetag: 21.08.2003
(51) Int. Cl.: G02B 6/32, G02B 6/293

(54) **OPTISCHER MULTIPLEXER UND DEMULTIPLEXER FÜR OPTISCHE FASERN MIT GROSSER NUMERISCHER APERTUR**
OPTICAL MULTIPLEXER AND DEMULTIPLEXER FOR OPTICAL FIBERS WITH A LARGE NUMERICAL APERTURE
MULTIPLEXEUR ET DEMULTIPLEXEUR OPTIQUE POUR FIBRES OPTIQUES A GRANDE OUVERTURE NUMERIQUE

(30) Priorität: 30.08.2002 DE 10240057
(43) Veröffentlichungstag der Anmeldung: 25.05.2005
(73) Patentinhaber: Fraunhofer-Gesellschaft zur Förderung der angewandten Forschung e.V., 80686 München (DE)
(72) Erfinder: TSCHEKALINSKIJ, Wladimir, 90429 Nürnberg (DE); JUNGER, Stephen, 91088 Bubenreuth (DE); WEBER, Norbert, 91367 Weissenohe (DE)
(74) Vertreter: Gagel, Roland
(86) Internationale Anmeldenummer: PCT/DE2003/002788
(87) Internationale Veröffentlichungsnummer: WO 2004/021058

(56) Entgegenhaltungen:
- US-A- 4 732 452
- US-A- 5 521 733
- US-A- 5 892 556
- US-A1- 2002 110 313
- US-B1- 6 292 298
- NEYER A ET AL: "PLASTIC-OPTICAL-FIBER-BASED PARALLEL OPTICAL INTERCONNECTS" IEEE JOURNAL OF SELECTED TOPICS IN QUANTUM ELECTRONICS, IEEE SERVICE CENTER, US, Bd. 5, Nr. 2, März 1999 (1999-03), Seiten 193-200, XP000865280 ISSN: 1077-260X
- HECHT, EUGENE: "Optik" 1989, ADDISON-WESLEY * Seite 246 - Seite 253 *

## Beschreibung

### Technisches Anwendungsgebiet

Die vorliegende Erfindung betrifft einen optischen Multiplexer/Demultiplexer mit zumindest einem Eingangskanal für den Anschluss einer Eingangsfaser und mehreren Ausgangskanälen für den Anschluss von Ausgangsfasern, einer Strahlaufteilungseinheit zur wellenlängenabhängigen Aufteilung eines auf dem Eingangskanal eintreffenden optischen Strahls auf die Ausgangskanäle, wobei am Eingangskanal eine Eingangsoptik zur Erzeugung eines parallelen Strahlbündels eines aus der Eingangsfaser austretenden Strahls und an den Ausgangskanälen eine Ausgangsoptik zur Fokussierung des aus der Strahlaufteilungseinheit austretenden parallelen Strahlbündels auf die Ausgangsfasern angeordnet sind.

Optische Multiplexer und Demultiplexer werden in der optischen Datenübertragungstechnik eingesetzt. Bei den sog. Wellenlängen-Multiplexern bzw. Demultiplexern werden die einzelnen Kanäle mit unterschiedlichen Wellenlängen über dieselbe Übertragungsstrecke, d. h. dieselbe optische Faser übertragen. Über den Multiplexer werden die unterschiedlichen Kanäle in die gemeinsame Faser eingekoppelt, der Demultiplexer trennt die einzelnen Kanäle am Ende der Übertragungsstrecke wieder auf. Als optische Fasern werden hierbei bisher in der Regel sog. Singlemode- (SMF) oder Multimode-fasern (MMF) eingesetzt, die eine relativ geringe numerischer Apertur von 0,13 bzw. 0,22 aufweisen.

Gerade bei Anwendungen der optischen Übertragungstechnik für optische LANs, optische Freiraumübertragung, für die Hauskommunikation, die Automatisierungstechnik, die Verkehrstechnik oder die Medizintechnik besteht ein Bedarf an kostengünstigen Lösungen. Singlemode- und Multimodefasern ermöglichen zwar aufgrund ihrer relativ geringen numerischen Apertur und ihres geringen Durchmessers eine gute Strahlqualität, sind jedoch in der Herstellung und Anwendung relativ teuer. Kostengünstiger ist der Einsatz von Polymerfasern (POF) und Hard Clad Silica (HCS) Fasern, die auf dem Gebiet der Beleuchtungs- und Sensortechnik bereits eingesetzt werden. Diese optischen Fasern weisen jedoch eine relativ große numerische Apertur und einen großen Kerndurchmesser auf, so dass die Strahlqualität bei der Anwendung deutlich schlechter als bei den Singlemode- und Multimodefasern ist.

### Stand der Technik

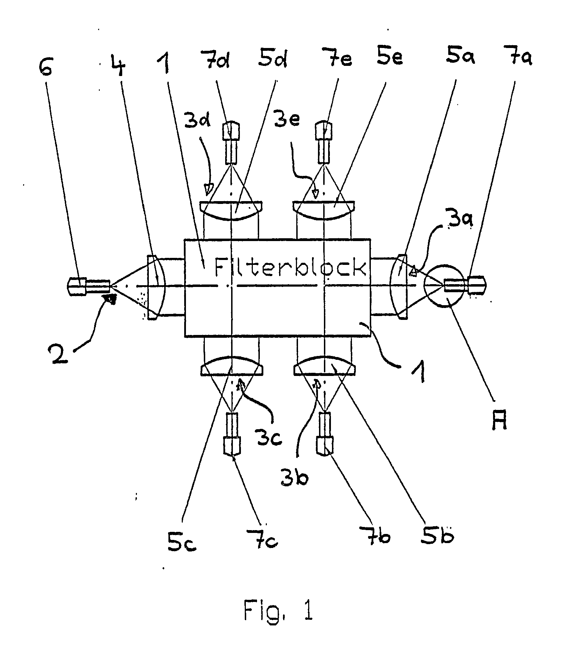

Optische Multiplexer und Demultiplexer für Wellenlängen-Multiplexverfahren sind in der Regel für Singlemode- und Multimode-Fasern entwickelt. Ein Beispiel für einen derartigen Multiplexer/Demultiplexer ist in Figur 1 dargestellt. Der Multiplexer bzw. Demultiplexer weist einen Eingangskanal 2 für eine Eingangsfaser 6 sowie mehrere Ausgangskanäle 3a bis e für mehrere Ausgangsfasern 7a - e und eine als Filterblock ausgebildete Strahlaufteilungseinheit 1 zur wellenlängenabhängigen Aufteilung eines auf dem Eingangskanal 2 eintreffenden optischen Strahls auf die Ausgangskanäle 3a bis e auf. Am Eingangskanal 2 ist eine Eingangsoptik 4 in Form einer kollimierenden Linse zur Erzeugung eines parallelen Strahlbündels des aus der Eingangsfaser 6 austretenden Strahls angeordnet. In gleicher Weise sind an den Ausgangskanälen Ausgangsoptiken 5a - e zur Fokussierung des aus der Strahlaufteilungseinheit 1 austretenden parallelen Strahlbündels in die Ausgangsfasern 7a - e angeordnet.

Die Eingangsfaser 6 dient hierbei als optische Übertragungsstrecke der unterschiedlichen Kanäle, die in dem dargestellten Demultiplexer wellenlängenabhängig wieder auf einzelne Ausgangsfasern aufgeteilt werden. Die in der Figur dargestellte Linse der Eingangsoptik 4 kollimiert hierzu das aus der Eingangsfaser 6 austretende Licht, um ein paralleles Strahlbündel in den Filterblock 1 einzukoppeln. In dem Filterblock wird das Licht in die unterschiedlichen Kanäle wellenlängenselektiv aufgeteilt, wobei je Ausgangskanal ein anderer Wellenlängenbereich ausgekoppelt wird. Über die an den Ausgangskanälen angeordneten Fokussierlinsen wird das jeweils ausgekoppelte Licht in die Ausgangsfasern eingekoppelt. Die gesamte Vergrößerung einer derartigen Anordnung ist dabei 1, d. h. es handelt sich um eine 1:1 Abbildung von der Eingangsfaser in die Ausgangsfasern. Beispiele für derartige Multiplexer/Demultiplexer sind aus der DE 198 21 245 C1, der EP 1 170 607 A1, der US 6,201,908 B1 oder der US 6,292,298 B1 bekannt. Die drei letztgenannten Druckschriften geben insbesondere unterschiedliche Ausgestaltungen der Strahlaufteilungseinheit 1 an, mit der die wellenlängenabhängige Strahlaufteilung vorgenommen wird. Für die Eingangs- bzw. Ausgangsoptiken werden bei diesen Multiplexern bzw. Demultiplexern in der Regel herkömmliche oder asphärische Linsen aus Plastik oder Glas eingesetzt. Die US 6,201,908 B1 gibt hierbei eine Strahlaufteilungseinheit an, die sich aus einem vorgefertigten optischen Block mit einer Vielzahl von Filtern sowie einem gegossenen Kopplungsmodul aus Plastik zusammensetzt, in das ein Array von asphärischen Linsen als Ausgangsoptiken und eine kollimierende Linse als Eingangsoptik integriert sind. Ein derartiger Filterblock lässt sich jedoch nur für die Aufgabe einsetzen, für die er angefertigt ist. Lichtquellen mit anderer Wellenlänge oder anderer Aufteilung der Kanäle können nicht eingesetzt werden, da das Auswechseln der Filter nicht möglich ist. Auch bei den anderen dargestellten Lösungen ist ein Auswechseln der Filter der Strahlaufteilungsoptik entweder kompliziert oder überhaupt nicht möglich. Als Filterelemente werden hierbei in der Regel optische Filter oder dichroitische Spiegel eingesetzt, über die die wellenlängenabhängige Strahlaufteilung erreicht wird. Grundsätzlich lässt sich, wie auch bei der vorliegenden Erfindung, ein Demultiplexer auch als Multiplexer einsetzen, wenn die Strahlrichtung umgekehrt wird, d. h. die Ausgangskanäle als Eingangskanäle und der Eingangskanal als Ausgangskanal genutzt werden.

Die DE 100 39 825 A1 offenbart eine Anordnung zum Multiplexen von Laserstrahlung, bei der zwischen einer Eingangsoptik und einer Ausgangsoptik mehrere teildurchlässige Spiegel zur Strahlteilung und Aufteilung des Lichtes gleichzeitig auf mehrere Ausgangsfasern angeordnet sind. Das Linsensystem der Eingangs- und Ausgangsoptik setzt sich aus Linsen mit gleichen Materialeigenschaften oder sehr ähnlichen Brechungsindizes zusammen, um eine möglichst verlustarme Kopplung von Hochleitungslaserstrahlung bei verringerter thermischer Belastung der Komponenten zu erreichen. Die Laserstrahlung weist bei dieser Anordnung bevorzugt einen Aperturbereich zwischen 80 und 220 mrad entsprechend einer numerischen Apertur von maximal 0,22 auf.

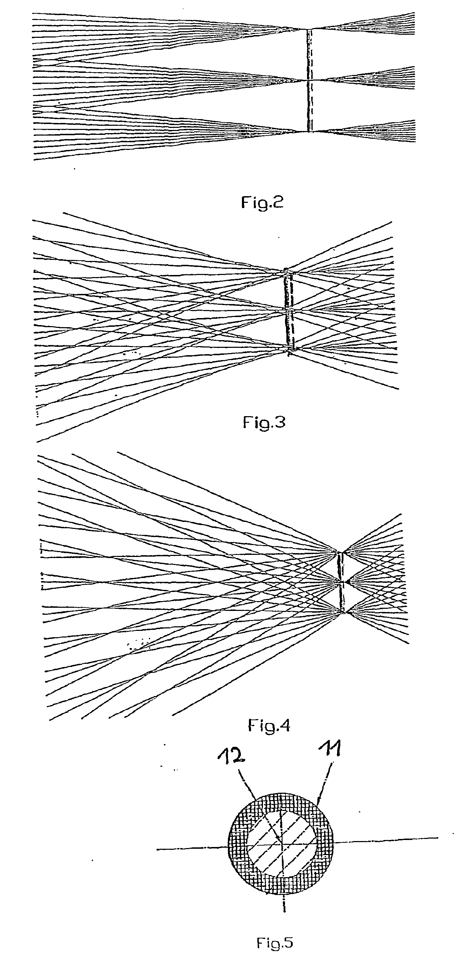

Die genannten Druckschriften beschreiben jedoch nur Multiplexer bzw. Demultiplexer für Singlemode- oder Multimodefasern. Bei derartigen Fasern lässt sich aufgrund der geringen numerischen Apertur eine kleine Dämpfung von 1 - 3 dB bei guter Kanalübersprechdämpfung von 25 - 30 dB im Multiplexer bzw. Demultiplexer erreichen. Figur 2 zeigt hierzu einen mit einem optischen Designprogramm berechneten Strahlengang, wie er sich im Bereich A der Figur 1, d. h. bei der Einkopplung eines Ausgangskanalstrahls in eine Ausgangsfaser ergibt. Die durchgezogene Linie deutet hierbei die Größe des Strahldurchmessers, die gestrichelte Linie den Durchmesser des Faserkerns an. Aus dieser Figur ist deutlich ersichtlich, dass sich bei den bekannten Systemen des Standes der Technik eine gute Einkopplung in die Ausgangsfasern realisieren lässt, da die Abbildungsqualität bei Single- und Multimodefasern aufgrund ihrer geringen numerischen Apertur sehr gut ist. Sollen jedoch kostengünstigere POF oder HCS-Fasern eingesetzt werden, so ergibt sich in diesem Fall ein Strahlengang, wie er in der Figur 3 angedeutet ist. Die Darstellung wurde für eine HCS-Faser mit einer numerischen Apertur von 0,4 und einer asphärischen Linse in der Ausgangsoptik berechnet. Der Darstellung der Figur 2 liegt eine Multimodefaser mit einer numerischen Apertur von 0,22 und ebenfalls eine asphärische Linse in der Ausgangsoptik zu Grunde.

Aus der Figur 3 ist sehr gut zu erkennen, dass sich aufgrund der schlechteren Abbildungsqualität bei der HCS-Faser ein Strahldurchmesser ergibt, der größer als der Durchmesser des Faserkerns ist. Das Ergebnis dieser schlechteren Abbildungsqualität macht sich als Energieverlust bzw. Dämpfung bemerkbar. Wird eine POF-Faser verwendet, die eine noch größere numerische Apertur aufweist, so ist die Abbildungsqualität nochmals geringer. Wie in der Figur 5 zu erkennen ist, die eine Abbildung 11 des Strahldurchmessers auf die Stirnfläche 12 der Ausgangsfaser darstellt, geht ein relativ großer Teil des Lichts an der Faser vorbei, so dass mit einem derartigen Multiplexer bzw. Demultiplexer in Verbindung mit POF oder HCS-Fasern keine guten, d. h. niedrigen Dämpfungswerte erreichbar sind.

Die US 6 219 473 B1 beschreibt einen gattungsgemäßen optischen Multiplexer/Demultiplexer, der einen Achromat zur Korrektur der geometrischen und chromatischen Aberration umfasst. In einer Ausgestaltung ist eine zusätzliche Linse im Strahlengang des Multiplexers/Demultiplexers angeordnet, die als Feldlinse dient und nicht zur Korrektur.der Aberrationen beiträgt.

Ausgehend von diesem Stand der Technik besteht die Aufgabe der vorliegenden Erfindung darin, einen optischen Multiplexer und Demultiplexer anzugeben, der bei Einsatz von optischen Fasern mit relativ großer numerischer Apertur und relativ großen Kerndurchmessern eine geringe Dämpfung aufweist.

### Darstellung der Erfindung

Die Aufgabe wird mit dem Multiplexer und Demultiplexer gemäß Patentanspruch 1 gelöst. Vorteilhafte Ausgestaltungen des Multiplexers/Demultiplexers sind Gegenstand der Unteransprüche oder lassen sich aus der nachfolgenden Beschreibung und den Ausführungsbeispielen entnehmen.

Der vorliegende optische Multiplexer/Demultiplexer weist in bekannter Weise zumindest einen Eingangskanal für den Anschluss einer Eingangsfaser, mehrere Ausgangskanäle für den Anschluss von Ausgangsfasern und eine Strahlaufteilungseinheit zur wellenlängenabhängigen Aufteilung eines auf dem Eingangskanal eintreffenden optischen Strahls auf die Ausgangskanäle auf. Am Eingangskanal ist eine Eingangsoptik zur Erzeugung eines parallelen Strahlbündels eines aus der Eingangsfaser austretenden Strahls und an den Ausgangskanälen eine Ausgangsoptik zur Fokussierung des aus der Strahlaufteilungseinheit austretenden parallelen Strahlbündels auf die Ausgangsfasern angeordnet. Die Eingangs- und/oder zumindest eine der Ausgangsoptiken bilden bei dem vorliegenden optischen Multiplexer und Demultiplexer ein Kollimierungs-Objektiv aus einer Linsenkombination aus zumindest einer positiven Linse und einem Achromaten, die so ausgebildet sind, dass durch deren Kombination eine Korrektur der Aberrationen des durchtretenden Strahls, insbesondere der chromatischen Aberration, erfolgt.

Durch Anschluss der optischen Fasern mit einer relativ großen numerischen Apertur an die entsprechenden Kanäle mit der Linsenkombination aus positiver Linse, d. h. Sammellinse, und Achromaten lässt sich eine deutlich bessere Abbildungsqualität erreichen, als dies mit den bekannten Multiplexern bzw. Demultiplexern des Standes der Technik möglich ist. Mit dieser Linsenkombination mit dem Achromaten werden die Aberrationen bei der Abbildung des Multiplexers/Demultiplexers korrigiert. Durch diese Korrektur wird die Abbildungsqualität erhöht, so dass der Energieverlust bzw. die Dämpfung beim Ein- oder Auskoppeln verringert wird. Mit einer einzigen Linse, wie sie bei den optischen Multiplexern und Demultiplexern des Standes der Technik eingesetzt werden, ist es nicht möglich, eine chromatische Aberration zu korrigieren. Daher beträgt die spektrale Bandbreite der bekannten Anordnungen des Standes der Technik typischerweise lediglich ca. 100 nm. Beim vorliegenden Multiplexer und Demultiplexer lässt sich dagegen aufgrund der Korrektur der chromatischen Aberration eine spektrale Bandbreite erreichen, die typischerweise im Bereich von ca. 400 nm liegt. Damit können Demultiplexer und Multiplexer in diesem Spektralbereich mit ein und derselben Linsenkonfiguration für unterschiedliche Lichtquellen gebaut werden, wobei lediglich die Filterelemente in der Strahlaufteilungseinheit ausgewechselt werden müssen. Der große Spektralbereich ist besonders vorteilhaft, da dadurch viele Kanäle auch bei großem Kanalabstand von bspw. 20 - 100 nm realisiert werden können. Diese Technik ist unter dem Stichwort coarse WDM (CWDM) bekannt. Bei geeigneter Konfiguration kann der vorliegende Multiplexer/Demultiplexer auch als Add/Drop-Multiplexer eingesetzt werden.

Der besondere Vorteil des vorliegenden Multiplexers/Demultiplexers besteht in der geringen Dämpfung von lediglich 2 - 5 dB beim Einsatz von Fasern mit hoher numerischer Apertur, wie bspw. POF oder HCS-Fasern. Selbstverständlich ist das optische Design auch für optische Fasern mit geringeren numerischen Aperturen, wie bspw. Multimode-Fasern, geeignet. Für diese Fasern hat der Demultiplexer bzw. Multiplexer ähnlich geringe Verluste. Die besonderen Vorteile liegen jedoch in der Verwendung der genannten HCS-Fasern oder POF, die relativ kostengünstig herstellbar sind. Ein Kollimierungs-Objektiv wie es bei der vorliegenden Erfindung zum Einsatz kommt, d. h. eine Linsenkombination aus positiver Linse und Achromat, bildet eine HCS-Faser mit einer numerischen Apertur von 0,4 und einem Kerndurchmesser von 200 µm oder eine POF mit einer numerischen Apertur von 0,5 und einem Kerndurchmesser von 1000 µm mit einer sehr hohen Qualität ab, so dass die gesamten Verluste für einen Kanal, die durch die Strahlaufteilungseinheit aus bspw. 3 dichroitischen Spiegeln und zwei Objektiven entstehen, weniger als 3 dB betragen.

Grundsätzlich lassen sich alle Eingangs- und Ausgangsoptiken mit einem derartigen Objektiv aus zumindest einer positiven Linse und einem Achromaten realisieren. Es ist jedoch auch möglich, den Multiplexer bzw. Demultiplexer mit einer Multimode-Eingangsfaser und Ausgangsfasern mit größerer numerischer Apertur, wie POF oder HCS-Fasern, zu betreiben. In diesem Falle kann die Eingangsoptik durch eine einfache Kollimationslinse gebildet werden. Selbstverständlich müssen die Brennweiten und numerischen Aperturen der jeweiligen Optiken auf die daran anzukoppelnden Fasern angepasst sein.

In einer vorteilhaften Ausführungsform des vorliegenden Verfahrens ist die Strahlaufteilungseinheit aus einer Anordnung aus mehreren dichroitischen Spiegeln gebildet, die in entsprechenden Halterungen eingesetzt sind. Vorzugsweise sind die Spiegelhalterungen derart ausgebildet, dass sich die Spiegel jederzeit leicht austauschen lassen. Geeignete Spiegelhalterungen sind kommerziell erhältlich und dem Fachmann bekannt. Jeder dichroitische Spiegel hat hierbei eine eigene Fassung bzw. Halterung und kann einfach gewechselt werden, wenn es erforderlich ist. Dadurch kann dasselbe Gehäuse für viele Variationen von Demultiplexern bzw. Multiplexern verwendet werden, wenn es in der Fertigung mit unterschiedlichen Spiegeln bestückt wird. Der Übergang zu einer anderen Lichtquelle ist dann sehr einfach, weil die dichroitischen Spiegel, von denen die spektrale Lage und Breite der optischen Kanäle abhängt, einfach und mit nur sehr geringem Aufwand gewechselt werden können.

Selbstverständlich lässt sich als Strahlaufteilungseinheit auch ein Filterblock einsetzen, wie er bspw. in den einleitend angeführten Druckschriften US 6,201,908 oder EP 1 170 607 A1 beschrieben ist. Auch der Einsatz anderer optischer Elemente wie bspw. Beugungsgitter ist möglich, insbesondere wenn eine größere Anzahl von Kanälen vorhanden ist.

Durch die vorliegende Erfindung wird somit ein Multiplexer bzw. Demultiplexer bereitgestellt, der sich mit kostengünstigen POF oder HCS-Fasern bei geringer Dämpfung und hoher Kanalübersprechdämfpung betreiben lässt. Dies ermöglicht den kostengünstigen Einsatz optischer Datenübertragungstechnik, beispielsweise in Haus-Multimedia-Netzen, in Metronetzen, in Fahrzeugen sowie bei beliebigen Sensoranwendungen. Die großen mechanischen Toleranzen der Faserdurchmesser derartiger Fasern von 100 µm bis 1000 µm ermöglichen deren kostengünstige Fertigung und einfache Konfektionierung.

Durch entsprechende Wahl von Objektiven mit unterschiedlichen Brennweiten kann der Demultiplexer bzw. Multiplexer auch gleichzeitig für mehrere Fasern mit unterschiedlichen Durchmessern und numerischen Aperturen eingesetzt werden. So kann bspw. am Eingang eine HCS-Faser angekoppelt werden, während ein Teil der Ausgänge für POF und ein anderer Teil für eine oder mehrere HCS-Fasern ausgebildet ist. Durch die unterschiedlichen Kerndurchmesser dieser beiden Fasertypen sind unterschiedliche Abbildungsmaßstäbe erforderlich, die durch geeignete Wahl der Brennweiten der Objektive erreicht werden können. Somit kann auch ein Optimum an Koppeleffizienz durch Optimierung des Abbildungsmaßstabes unter Berücksichtigung der numerischen Aperturen durch die Wahl geeigneter Objektive mit unterschiedlichen Brennweiten erreicht werden.

Die Strahlaufteilungseinheit zusammen mit der Eingangs- und den Ausgangsoptiken ist vorzugsweise in einem Gehäuse angeordnet, wobei die Eingangs- und Ausgangskanäle entsprechende Anschlüsse für die Eingangs- und Ausgangsfasern aufweisen. Diese Anschlüsse sind vorzugsweise als SMA-Stecker ausgebildet und für den Anschluss von Polymer- und HCS-Fasern ausgelegt.

### Kurze Beschreibung der Zeichnungen

Der vorliegende Multiplexer und Demultiplexer wird nachfolgend anhand eines Ausführungsbeispiels in Verbindung mit den Zeichnungen nochmals kurz erläutert. Hierbei zeigen:
- Fig. 1: schematisch ein Beispiel für einen optischen Demultiplexer des Standes der Technik;
- Fig. 2: ein Beispiel für die Abbildungsqualität eines Demultiplexers des Standes der Technik bei Einsatz von Multimode- Fasern;
- Fig. 3: ein Beispiel für die Abbildungsqualität eines optischen Demultiplexers des Standes der Technik bei Einsatz von HCS-Fasern;
- Fig. 4: ein Beispiel für die Abbildungsqualität eines erfindungsgemäßen Demultiplexers bei Einsatz von POF-Fasern;
- Fig. 5: ein Beispiel für eine Abbildung des Strahldurchmessers auf die Ausgangs- faser bei einer Konstellation gemäß Figur 3; und

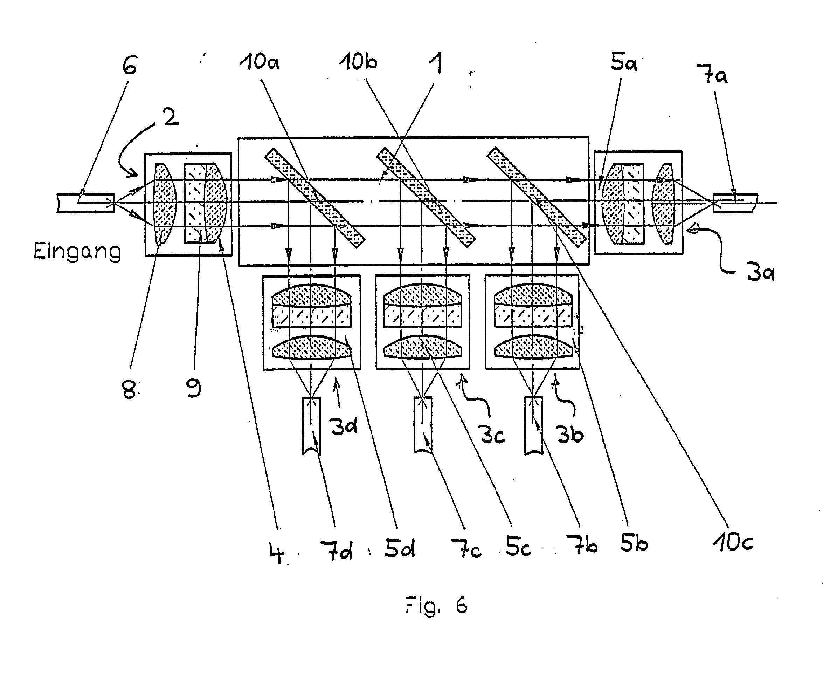

- Fig. 6: schematisch ein Beispiel für die Ausgestaltung eines erfindungsgemäßen Multiplexers bzw. Demultiplexers.

### Wege zur Ausführung der Erfindung

Figur 6 zeigt schematisch ein Beispiel für eine Ausgestaltung eines optischen Multiplexers und Demultiplexers gemäß der vorliegenden Erfindung. In der Figur ist das Ende einer Eingangsfaser 6 dargestellt, die an einem Eingangskanal 2 des vorliegenden Demultiplexers angekoppelt ist. Am Eingangskanal 2 ist eine Eingangsoptik 4 angeordnet, die aus einer positiven Linse 8 und einem Achromaten 9 gebildet ist. Durch diese Eingangsoptik 4 wird der aus der Eingangsfaser 6 austretende divergente Strahl in ein paralleles, d. h. kollimiertes Strahlbündel umgewandelt, das in die als Filterblock ausgebildete Strahlaufteilungseinheit 1 eintritt. In dieser Strahlaufteilungseinheit 1 sind 3 dichroitische Spiegel 10a, 10b, 10c unter einem Winkel von 45° zur optischen Achse angeordnet. Jeder Spiegel reflektiert das Licht aus einem entsprechenden Spektralbereich, der Rest der enthaltenen Wellenlängen passiert mit geringer Dämpfung den Spiegel. Die reflektierten Strahlanteile werden auf die Ausgangskanäle 3b - 3d gelenkt, der verbleibende durchtretende Strahlanteil auf den Ausgangskanal 3a. An jedem der Ausgangskanäle ist eine Ausgangsoptik 5a - 5d in Form eines Objektivs angeordnet. Sämtliche der in diesem Beispiel eingesetzten Objektive als Eingangs- oder Ausgangsoptiken bestehen aus einer positiven, in diesem Fall plankonvexen Linse 8 und einem Achromaten 9. Die Linse 8 kann auch ein positiver Meniskus sein. Alle Linsen bestehen aus optischem Glas und haben nur sphärische Flächen. Die optimale Brennweite der Objektive variiert je nach Fasertyp und liegt bspw. für Polymerfasern mit einem Durchmesser von 1 mm bei ca. 15 mm. Mit den Ausgangsobjektiven 5a - 5d wird der jeweilige Ausgangsstrahl auf die Ausgangsfasern 7a - 7d fokussiert.

Mit der Eingangsfaser 6 wird Licht von 2, 3, 4 oder mehr gemischten Wellenlängen in den dargestellten Demultiplexer eingekoppelt. Das Licht ist in der Faser homogen gemischt und besteht bspw. aus blauen, grünen, orangen und roten Anteilen von LED's bzw. Laserdioden. Aus der Faser 6 tritt das divergente Strahlbündel aus, das durch die Eingangsoptik 4 kollimiert wird. Ein kleiner Divergenzwinkel für die Kollimierung ist sehr wichtig, da die Bandbreite der Interferenzfilter oder dichroitischen Spiegel der Strahlaufteilungseinheit 1 und damit das Übersprechen zwischen den Kanälen von diesem Winkel abhängen.

Die Kombination aus den beiden Linsen 8 und 9 der Objektive reicht aus, um chromatische Aberrationen über eine spektrale Bandbreite von 400 nm zu korrigieren. Jeweils zwei Objektive, das Eingangsobjektiv 4 und eines der Ausgangsobjektive 5a-d, bilden ein abbildendes optisches System, wobei der Abbildungsmaßstab jeweils gleich oder unterschiedlich sein kann. In der dargestellten Figur 6 ist als Ausführungsbeispiel ein Demultiplexer für POF mit identischen Objektiven und jeweils einem Abbildungsmaßstab von 1 dargestellt.

Die Objektive sind für einen Faserdurchmesser der POF von 1 mm und eine numerische Apertur von 0,5 optimiert. Dieser Fasertyp ist zur Zeit die dickste Faser, die in der Datenübertragungstechnik verwendet wird. Das optische System ist gut Aberrations-korrigiert und bildet die Faser sehr gut ab.

Figur 4 zeigt ein Beispiel für den Strahlengang in der Nähe der Abbildungsebene. Sehr gut ist in dieser Figur zu erkennen, dass der mit der durchgezogenen Linie angedeutete Strahldurchmesser dem mit der gestrichelten Linie dargestellten Durchmesser des Kerns der Ausgangsfaser sehr gut entspricht, so dass sich sehr geringe Verluste ergeben. Diese Figur ist vergleichbar mit den in der Beschreibungseinleitung erläuterten Figuren 2 und 3. Für Fasern mit kleinerer numerischer Apertur oder kleinerem Durchmesser eignet sich das System zwangsläufig noch besser.

Bei dem dargestellten System besteht jeder Kanal aus zwei Objektiven 4, 5a-d und einem dichroitischen Spiegel 10a-c. Um neue Lichtquellen verwenden zu können, muss der dichroitische Spiegel leicht wechselbar sein. Jeder Spiegel hat daher eine eigene Fassung und wird mittels einer speziellen Einrichtung im Gehäuse montiert, die in dieser Abbildung nicht zu erkennen ist. Diese Lösung erlaubt ein einfaches Auswechseln der Lichtquelle bzw. des Wellenlängen-Kanals ohne zusätzliche Justage und Konstruktionsänderungen.

Mit dem dargestellten Multiplexer und Demultiplexer sind die Verluste beim Einsatz von Fasern mit hoher numerischer Apertur sehr gering und die Kanalübersprechdämpfung sehr hoch, in jedem Fall besser als bei einem Multiplexer/Demultiplexer mit einer einfachen Glas- oder Plastikasphäre, wie sie im Stand der Technik eingesetzt werden. Die Abbildung kann durch symmetrische Objektive oder durch nichtsymmetrische Objektive (Abbildungsmaßstab ungleich 1) erfolgen. Durch die entsprechende Wahl der Objektive mit unterschiedlichen Brennweiten kann der Demultiplexer gleichzeitig für mehrere Fasern mit unterschiedlichen Durchmessern und numerischen Aperturen eingesetzt werden.

### Bezugszeichenliste

- 1: Strahlaufteilungseinheit
- 2: Eingangskanal
- 3a - d: Ausgangskanäle
- 4: Eingangsoptik
- 5a - d: Ausgangsoptik
- 6: Eingangsfaser
- 7a - d: Ausgangsfasern
- 8: positive Linse
- 9: Achromat
- 10a - c: dichroitische Spiegel
- 11: Abbildung des Strahldurchmessers
- 12: Stirnfläche der Ausgangsfaser

## Patentansprüche

1. Optischer Multiplexer/Demultiplexer mit zumindest einem Eingangskanal (2) mit einer Eingangsfaser (6), mehreren Ausgangskanälen (3a-d) mit Ausgangsfasern (7a-d), und einer Strahlaufteilungseinheit (1) zur wellenlängenabhängigen Aufteilung eines auf dem Eingangskanal (2) eintreffenden optischen Strahls auf die Ausgangskanäle (3a-d), wobei am Eingangskanal (2) eine Eingangsoptik (4) zur Erzeugung eines parallelen Strahlbündels eines aus der Eingangsfaser (6) austretenden Strahls und an den Ausgangskanälen (3a-d) eine Ausgangsoptik (5a-d) zur Fokussierung des aus der Strahlaufteilungseinheit (1) austretenden parallelen Strahlbündels auf die Ausgangsfasern (7a-d) angeordnet sind,
**dadurch gekennzeichnet,**
**dass** die Eingangs- (4) und/oder zumindest eine der Ausgangsoptiken (5a-d) ein Kollimierungs-Objektiv aus einer Linsenkombination aus zumindest einer positiven Linse (8) und einem Achromaten (9) bilden, die so ausgebildet sind, dass durch deren Kombination eine Korrektur von Aberrationen des durchtretenden Strahls erfolgt,
**dass** die Eingangs- (4) und Ausgangsoptiken (5a-d) für Eingangs- bzw. Ausgangsfasern mit einer numerischen Apertur > 0,3 ausgebildet sind, und
**dass** die Ausgangskanäle (3a-d) als Ausgangfasern POF-und/oder HCS- Fasern aufweisen und
der Eingangskanal (2) als Eingangsfaser eine POF- oder HCS-Faser aufweist.

2. Optischer Multiplexer/Demultiplexer nach Anspruch 1, **dadurch gekennzeichnet,**
**dass** die Eingangsoptik (4) und die Ausgangsoptiken (5a-d) für eine 1:1 - Abbildung ausgebildet sind.

3. Optischer Multiplexer/Demultiplexer nach Anspruch 1 oder 2, **dadurch gekennzeichnet,**
**dass** die Eingangsoptik (4) mit zumindest einer der Ausgangsoptiken (5a-d) für eine Abbildung ≠ 1:1 ausgebildet sind.

4. Optischer Multiplexer/Demultiplexer nach einem der Ansprüche 1 bis 3, **dadurch gekennzeichnet,**
**dass** die Strahlaufteilungseinheit (1) eine Anordnung aus dichroitischen Spiegeln (10a-c) zur Strahlaufteilung umfasst.

5. Optischer Multiplexer/Demultiplexer nach Anspruch 4, **dadurch gekennzeichnet,**
**dass** die dichroitischen Spiegel (10a-c) in Halterungen eingesetzt sind, die einen einfachen Austausch der Spiegel (10a-c) ermöglichen.

6. Optischer Multiplexer/Demultiplexer nach einem der Ansprüche 1 bis 5, **dadurch gekennzeichnet,**
**dass** die Linsenkombination aus der positiven Linse (8) und dem Achromaten (9) zur Korrektur der chromatischen Aberration für eine spektrale Bandbreite von ca. 400 nm ausgelegt ist.

## Claims

1. An optical multiplexer/demultiplexer having at least one input channel (2) with an input fiber (6), multiple output channels (3a-d) with output fibers (7a-d), and a beam splitting unit (1) for the wavelength-dependent splitting of an optical beam, which is incident on the input channel (2), onto the output channels (3a-d), an input optics (4) for generating a parallel beam bundle of a beam exiting from the input fiber (6) being situated on the input channel (2) and an output optics (5a-d) for focusing the parallel beam bundle exiting from the beam splitting unit (1) onto the output fibers (7a-d) being situated on the output channels (3a-d),
**characterized in that** the input optics (4) and/or at least one of the output optics (5a-d) form a collimation objective made of a lens combination of at least one positive lens (8) and one achromatic lens (9), which are implemented so that a correction of aberrations of the passing beam occurs through their combination, the input (4) and output optics (5a-d) are implemented for input and output fibers, respectively, having a numeric aperture > 0.3, the output channels (3a-d) have POF and/or HCS fibers as output fibers, and the input channel (2) has a POF or HCS fiber as the input fiber.

2. The optical multiplexer/demultiplexer according to Claim 1, **characterized in that** the input optics (4) and the output optics (5a-d) are implemented for a 1:1 imaging.

3. The optical multiplexer/demultiplexer according to Claim 1 or 2, **characterized in that** the input optics (4) is implemented with at least one of the output optics (5a-d) for an imaging ≠ 1:1.

4. The optical multiplexer/demultiplexer according to one of Claims 1 through 3, **characterized in that** the beam splitting unit (1) comprises a configuration made of dichroic mirrors (10a-c) for beam splitting.

5. The optical multiplexer/demultiplexer according to Claim 4, **characterized in that** the dichroic mirrors (10a-c) are inserted into holders, which allow a simple replacement of the mirrors (10a-c).

6. The optical multiplexer/demultiplexer according to one of Claims 1 through 5, **characterized in that** the lens combination made of the positive lens (8) and the achromatic lens (9) is designed for correction of the chromatic aberration for a spectral bandwidth of approximately 400 nm.

## Revendications

1. Multiplexeur/démultiplexeur optique comportant au moins un canal d'entrée (2) avec une fibre d'entrée (6), de plusieurs canaux de sortie (3a-d) avec des fibres de sortie (7a-d) et d'une unité de fractionnement de rayons (1) pour le fractionnement en fonction de la longueur d'onde d'un rayon optique incident sur le canal d'entrée (2), étant disposée, au niveau du canal d'entrée (2), une optique d'entrée (4) pour générer un faisceau parallèle de rayons d'un rayon sortant de la fibre d'entrée (6) et, au niveau des canaux de sortie (3a-d) une optique de sortie (5ad) pour la focalisation du faisceau parallèle de rayons d'un rayon sortant de l'unité de fractionnement de rayons (1) sur les fibres de sortie (7a-d), **caractérisé en ce que**
les optiques d'entrée (4) et/ou au moins une des optiques de sortie (5a-d) constituent un objectif de collimation d'une combinaison de lentilles formée d'au moins une lentille positive (8) et d'un achromate (9) qui sont réalisés de manière à ce que leur combinaison permette une correction d'aberrations du rayon traversant,
que les optiques d'entrée (4) et/ou de sortie (5a-d) sont réalisées pour les fibres d'entrée ou de sortie avec une ouverture numérique > 0,3 et que
les canaux de sortie (3a-d) présentent comme fibres de sortie des fibres POF et/ou HCS.

2. Multiplexeur/démultiplexeur optique selon la revendication 1, **caractérisé en ce que** l'optique d'entrée (4) et les optiques de sortie (5a-d) sont réalisées pour une représentation 1 : 1.

3. Multiplexeur/démultiplexeur optique selon la revendication 1 ou 2, **caractérisé en ce que**
l'optique d'entrée (4) est réalisée avec au moins une des optiques de sortie (5a-d) pour une représentation ≠ 1 : 1.

4. Multiplexeur/démultiplexeur optique selon une des revendications 1 à 3, **caractérisé en ce que**
l'unité de fractionnement de rayons (1) englobe un dispositif de miroirs dichroïques (10a-c) pour le fractionnement des rayons.

5. Multiplexeur/démultiplexeur optique selon la revendication 4, **caractérisé en ce que**
les miroirs dichroïques (10a-c) sont insérés dans des supports qui permettent un échange facile des miroirs (10a-c).

6. Multiplexeur/démultiplexeur optique selon une des revendications 1 à 5, **caractérisé en ce que**
la combinaison de lentilles composée de la lentille positive et de l'achromate (9) est conçue pour la correction de l'aberration chromatique pour une largeur de bande spectrale d'environ 400 mm.
